# EUROPEAN PATENT APPLICATION

(11) **EP 4 597 164 A1**
(43) Date of publication of application: **06.08.2025**
(21) Application number: 23872546.9
(22) Date of filing: 28.09.2023
(51) Int. Cl.: G01S 7/537, G01S 15/931

(54) **OBJECT DETECTION DEVICE**

(30) Priority: 30.09.2022 JP 2022157981
(71) Applicant: AISIN CORPORATION, Kariya-shi, Aichi 448-8650 (JP); HONDA MOTOR CO., LTD., Tokyo 105-8404 (JP)
(72) Inventor: OMURA, Akihiro, Kariya-shi, Aichi 448-8650 (JP); SAKIUCHI, Takuya, Kariya-shi, Aichi 448-8650 (JP); WATANABE, Tatsuya, Tokyo 107-8556 (JP); TOSHIMA, Kohei, Tokyo 107-8556 (JP)
(74) Representative: TBK
(86) International application number: PCT/JP2023/035485
(87) International publication number: WO 2024/071325

(57) **Abstract**

An object detection device includes: a control unit that controls a transmission/reception unit to transmit a transmission wave at a predetermined transmission timing; a distance calculation unit that calculates a distance to an object based on the transmission wave and a reception wave; and a determination unit that determines a random time in accordance with each of a normal state in which the distance to the object is larger than a first distance or the object is not detected, a first approach state in which the distance to the object is smaller than or equal to the first distance, and a second approach state in which the distance to the object is smaller than or equal to a second distance smaller than the first distance. The control unit controls the transmission/reception unit to transmit the transmission wave at a new transmission timing obtained by delaying the transmission timing by the determined random time.

## Description

### TECHNICAL FIELD

Embodiments described herein relate generally to an object detection device.

### BACKGROUND ART

In a vehicle control system or the like, an object detection device has been used, which detects an object present around a vehicle by transmitting a transmission wave such as an ultrasonic wave from the vehicle and receiving a reception wave (reflected wave) generated by reflection of the transmission wave against the object.

In such an object detection device, when a given relation regarding transmission timing of ultrasonic wave is made between a host vehicle and another vehicle, there may occur interference by which an ultrasonic wave transmitted by the other vehicle is erroneously recognized as an ultrasonic wave transmitted by the host vehicle. In the conventional art, such interference is avoided by changing the transmission timing of ultrasonic wave in the host vehicle.

### CITATION LIST

### Patent Literature

Patent Document 1: JP 6413620 B2
Patent Document 2: JP 2018-59826 A

### SUMMARY OF INVENTION

### PROBLEM TO BE SOLVED BY THE INVENTION

However, when the host vehicle is subject to interference, the other vehicle is also subject to interference by ultrasonic waves from the host vehicle. Therefore, in the conventional art, in a case where both the host vehicle and the other vehicle are equipped with the same object detection devices whose method for avoiding interference is the same, both the host vehicle and the other vehicle avoid interference against one another, and, as a result, transmission timings of ultrasonic waves eventually coincide with each other, making it impossible to avoid interference.

### MEANS FOR SOLVING PROBLEM

An object detection device according to an embodiment is an object detection device installed in a vehicle to detect an object present around the vehicle, the object detection device including: a control unit that controls a transmission/reception unit that transmits a transmission wave and receives a reception wave generated by reflection of the transmission wave against the object, the control unit controlling the transmission/reception unit to transmit the transmission wave at a predetermined transmission timing; a distance calculation unit that calculates a distance to the object based on the transmission wave and the reception wave; and a determination unit that determines a random time as a standby time for shifting the transmission timing, the random time being determined in accordance with each of a normal state, a first approach state, and a second approach state, the normal state being a state in which the distance to the object is larger than a first distance or in which the object is not detected, the first approach state being a state in which the distance to the object is smaller than or equal to the first distance, the second approach state being a state in which the distance to the object is smaller than or equal to a second distance smaller than the first distance. The control unit controls the transmission/reception unit to transmit the transmission wave at a new transmission timing obtained by delaying the transmission timing by the determined random time.

### EFFECT OF THE INVENTION

According to the embodiment of the present invention, as an example, even if another vehicle is equipped with the same object detection device as the host vehicle, it is possible to reliably avoid interference between ultrasonic waves.

### BRIEF DESCRIPTION OF DRAWINGS

FIG. 1 is a top view illustrating an example of a configuration of a vehicle according to an embodiment;
FIG. 2 is a block diagram illustrating an example of a hardware configuration of a vehicle control system according to an embodiment;
FIG. 3 is a block diagram illustrating an example of a functional configuration of an object detection device according to the present embodiment;
FIG. 4 is a diagram illustrating an example of a transition of a vehicle state in the present embodiment;
FIG. 5A is a diagram illustrating an example of a random table in a case where the vehicle state is a normal state in the present embodiment;
FIG. 5B is a diagram illustrating an example of a random table in a case where the vehicle state is a first approach state in the present embodiment;
FIG. 5C is a diagram illustrating an example of a random table in a case where the vehicle state is a second approach state in the present embodiment;
FIG. 6 is a flowchart illustrating an example of a procedure of ultrasonic wave transmission processing according to the present embodiment;
FIG. 7 is a diagram illustrating an example of an ultrasonic wave transmission timing shifted by a random time in a conventional object detection device; and
FIG. 8 is a diagram illustrating an example of an ultrasonic wave transmission timing shifted by a random time in a conventional object detection device.

### DESCRIPTION OF EMBODIMENTS

Hereinafter, embodiments of the present disclosure will be described with reference to the drawings. The configurations of the embodiments described below and the functions and effects brought about by the configurations are merely examples, and the present invention is not limited to the following description.

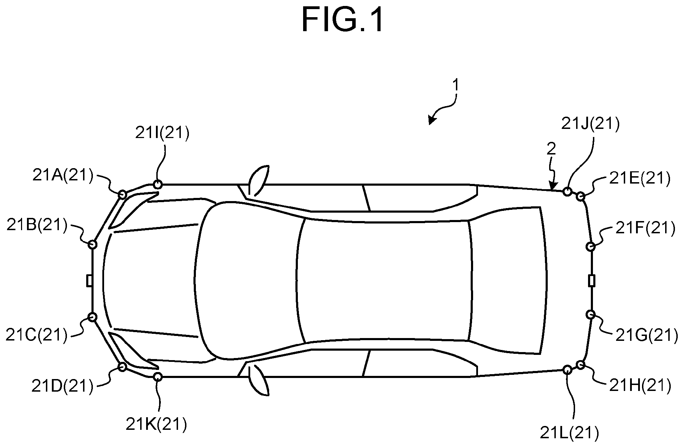

FIG. 1 is a top view illustrating an example of a configuration of a vehicle 1 according to an embodiment. The vehicle 1 is an example of a moving body in which an object detection device according to the present embodiment is installed. The object detection device according to the present embodiment is a device that detects an object present around the vehicle 1 based on information such as a time of flight (TOF) and a Doppler shift acquired by transmitting a transmission wave from the vehicle 1 and receiving a reception wave (reflected wave) generated by reflection of the transmission wave against the object.

The object detection device according to the present embodiment is connected to a plurality of transmission/reception units 21A to 21L. Here, in a case where it is not necessary to distinguish the transmission/reception units 21A to 21L, they are hereinafter referred to as transmission/reception units 21.

Each of the transmission/reception units 21 is installed on a vehicle body 2 as an exterior of the vehicle 1, transmits an ultrasonic wave (an example of a transmission wave) outward of the vehicle body 2, and receives a reflected wave from the object present outside the vehicle body 2 as a reception wave. In the example illustrated in FIG. 1, four transmission/reception units 21A to 21D are arranged at a front end part of the vehicle body 2, four transmission/reception units 21E to 21H are arranged at a rear end part of the vehicle body 2, two transmission/reception units 21I and 21J are arranged on a right side surface part of the vehicle body 2, and two transmission/reception units 21K and 21L are arranged on a left side surface part of the vehicle body 2. Note that the number of the transmission/reception units 21 and the installation positions of the transmission/reception units 21 are not limited to the present example.

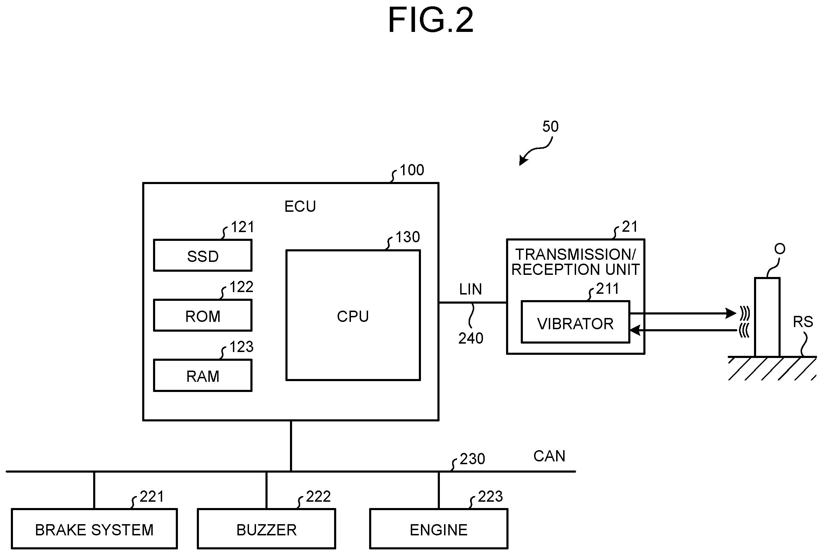

FIG. 2 is a block diagram illustrating an example of a hardware configuration of a vehicle control system 50 according to an embodiment. The vehicle control system 50 performs processing for controlling the vehicle 1 based on information output from the transmission/reception units 21. The vehicle control system 50 according to the present embodiment mainly includes an electronic control unit (ECU) 100, a plurality of transmission/reception units 21, a brake system 221, a buzzer 222, and an engine 223.

The ECU 100 and each of the transmission/reception units 21 are connected to each other by a local interconnect network (LIN) 240, which is an in-vehicle network. In addition, the ECU 100, the brake system 221, the buzzer 222, the engine 223, and a shift sensor 224 are connected to each other by a controller area network (CAN) 230, which is an in-vehicle network.

Each of the transmission/reception units 21 includes a vibrator 211 configured using a piezoelectric element or the like, an amplifier, etc., and the transmission/reception of ultrasonic waves is implemented by vibration of the vibrator 211. Specifically, each of the transmission/reception units 21 transmits, as a transmission wave, an ultrasonic wave generated in accordance with vibration of the vibrator 211, and detects vibration of the vibrator 211 caused by a reflected wave (reception wave) of the transmission wave reflected by an object such as an obstacle O or a road surface RS. The vibration of the vibrator 211 is converted into an electric signal, and a TOF corresponding to a distance from the transmission/reception unit 21 to the obstacle O, Doppler shift information corresponding to a relative speed of the obstacle O, and the like can be acquired based on the electric signal.

Note that, in the example illustrated in FIG. 2, a configuration is exemplified such that both the transmission of the transmission wave and the reception of the reception wave are performed by using the single vibrator 211, whereas the configuration of the transmission/reception unit 21 is not limited thereto. For example, the transmission side and the reception side may be separated, such as a configuration in which a vibrator for transmitting a transmission wave and a vibrator for receiving a reception wave are separately provided.

The ECU 100 is a unit that executes various types of processing for controlling the vehicle 1 based on various types of information. The ECU 100 is capable of controlling the brake system 221, the engine 223, or the like, and outputting a sound to the buzzer 222 by sending a control signal through the CAN 230. Furthermore, the ECU 100 can receive detection results from various sensors (not illustrated) and the like via the CAN 230.

As illustrated in FIG. 2, the ECU 100 includes a central processing unit (CPU) 130, a solid state drive (SSD) 121, a read only memory (ROM) 122, and a random access memory (RAM) 123. The ECU 100 is an example of the object detection device. The ECU 100 may also be referred to as the object detection device 100.

The CPU 130 is capable of, for example, performing various types of arithmetic processing and performing control in addition to processing of outputting an alarm to the buzzer 222, detecting an object, and determining whether there is interference with an object. The ROM 122 is a nonvolatile storage device. In the ROM 122, a program is stored in advance. The CPU 130 can read the program stored in the ROM 122 and execute arithmetic processing in accordance with the program.

The RAM 123 temporarily stores various types of data used in the calculation of the CPU 130. The SSD 121 is a rewritable nonvolatile storage unit, and is capable of storing data even when the power supply of the ECU 100 is turned off. The CPU 130, the ROM 122, the RAM 123, and the like may be integrated in the same package. In addition, the ECU 100 may have a configuration in which another logical operation processor such as a digital signal processor (DSP), a logic circuit, or the like is used instead of the CPU 130. In addition, a hard disk drive (HDD) may be provided instead of the SSD 121, and the SSD 121 or the HDD may be provided separately from the ECU 100.

The brake system 221 is, for example, an anti-lock brake system (ABS) that suppresses a lock of a brake, an electronic stability control (ESC) that suppresses a cornering skid of the vehicle 1, an electric brake system that enhances a braking force (executes brake assist), a brake by wire (BBW), or the like.

The engine 223 is a prime mover that drives the vehicle 1. The buzzer 222 is provided inside the vehicle 1 and outputs an alarm.

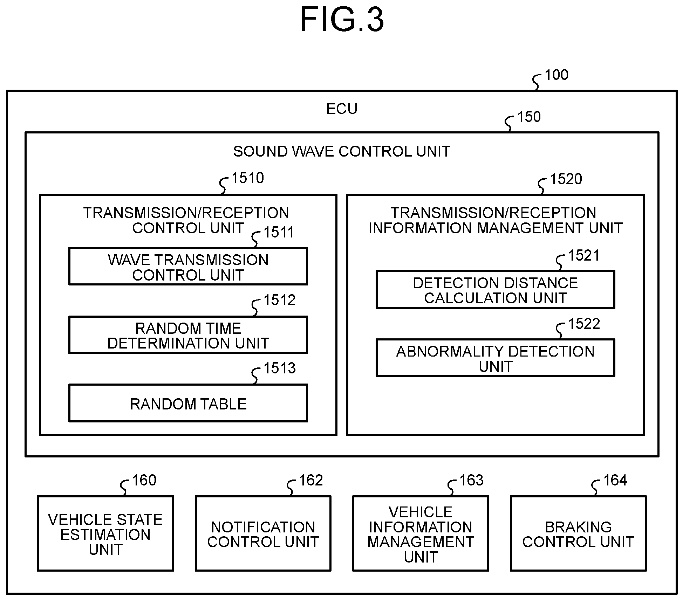

Next, a functional configuration of the object detection device (the ECU) 100 will be described. FIG. 3 is a block diagram illustrating an example of the functional configuration of the object detection device 100 according to the present embodiment. As illustrated in FIG. 3, the object detection device 100 according to the present embodiment has a functional configuration mainly including a sound wave control unit 150, a vehicle state estimation unit 160, a notification control unit 162, a vehicle information management unit 163, and a braking control unit 164.

The vehicle state estimation unit 160 estimates various states of the vehicle 1. In the present embodiment, the state of the vehicle 1 is estimated to be one of a normal state, a first approach state, and a second approach state based on a distance to the object calculated by a detection distance calculation unit 1521 to be described later. Here, the normal state, the first approach state, and the second approach state will be described in detail later.

When the vehicle 1 is approaching the object, namely, when an abnormality detection unit 1522 to be described later determines that the distance to the object calculated by the detection distance calculation unit 1521 to be described later is smaller than or equal to a predetermined distance based on ultrasonic waves transmitted and received by the transmission/reception unit 21, the notification control unit 162 issues a notification by outputting an alarm from the buzzer 222. The vehicle information management unit 163 manages various types of information of the vehicle 1. The braking control unit 164 controls braking to be performed by the brake system 221.

The sound wave control unit 150 controls transmission of ultrasonic waves by the transmission/reception unit 21, and manages information based on reflected waves received by the transmission/reception unit 21. As illustrated in FIG. 3, the sound wave control unit 150 includes a transmission/reception control unit 1510 and a transmission/reception information management unit 1520.

The transmission/reception control unit 1510 controls transmission/reception of ultrasonic waves performed by the transmission/reception unit 21. As illustrated in FIG. 3, the transmission/reception control unit 1510 includes a wave transmission control unit 1511, a random time determination unit 1512, and a random table 1513.

The wave transmission control unit 1511 controls the transmission/reception unit to transmit an ultrasonic wave at a predetermined transmission timing. More specifically, the wave transmission control unit 1511 controls the transmission/reception unit 21 to transmit an ultrasonic wave at a new transmission timing delayed by a random time determined by the random time determination unit 1512 to be described later. Here, the random time is a standby time for shifting the transmission timing of ultrasonic wave. The wave transmission control unit 1511 is an example of a control unit.

The random time determination unit 1512 determines a random time as the state of vehicle 1 in accordance with each of the normal state, the first approach state, and the second approach state. The random time determination unit 1512 is an example of a determination unit.

The normal state is a state in which a distance to a first object is larger than a first distance or no object is detected. The first approach state is a state in which the distance to the object is smaller than or equal to the first distance. The second approach state is a state in which the distance to the object is smaller than or equal to a second distance smaller than the first distance. In the present embodiment, the vehicle states are classified into three states based on the distance to the object calculated by the detection distance calculation unit 1521, and the vehicle state transitions between the three states. In the present embodiment, the first distance is set to 3 m, and the second distance is set to 1 m, but the first distance and the second distance are not limited thereto.

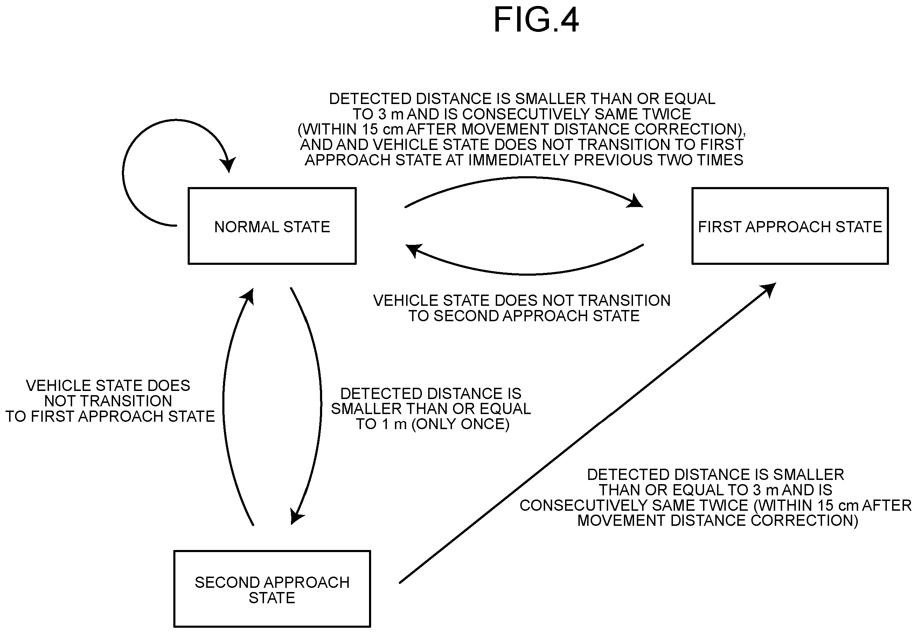

FIG. 4 is a diagram illustrating a transition of a vehicle state in the present embodiment. In a case where the vehicle state is the normal state, if the distance to the detected object is smaller than or equal to the first distance being 3 m and is consecutively the same (within 15 cm after movement distance correction), and if the vehicle state does not transition to the first approach state at immediately previous two times, the vehicle state transitions to the first approach state.

In a case where the vehicle state is the normal state, if the distance to the detected object is smaller than or equal to the second distance, which is 1 m, the vehicle state transitions to the second approach state when the distance becomes smaller than or equal to 1 m once. Otherwise, the vehicle state does not transition from the normal state.

After the vehicle state transitions to the first approach state, the vehicle state transitions to the normal state without transitioning to the second approach state. After the vehicle state transitions to the second approach state, the vehicle state transitions to the normal state without transitioning to the first approach state.

In other words, the random time determination unit 1512 determines a random time in the first approach state or a random time in the second approach state, and determines a random time in the normal state after the wave transmission control unit 1511 transmits a transmission wave at a new transmission timing.

Specifically, by referring to the random table 1513, the random time determination unit 1512 determines, in accordance with the state of the vehicle 1, a random time for ultrasonic waves as transmission waves from the transmission/reception units 21A to 21D provided at the front portion of the vehicle 1 and a random time for ultrasonic waves from the transmission/reception units 21E to 21H provided at the rear portion of the vehicle 1, so as to differentiate these random times.

The random table 1513 is stored in a storage medium such as the SSD 121. In the random table 1513, a random time (an example of a first random time) for transmission waves from the transmission/reception units 21A to 21D provided at the front portion of the vehicle 1 and a random time (an example of a second random time) for transmission waves from the transmission/reception units 21E to 21H provided at the rear portion of the vehicle 1 are determined for each vehicle state, namely, each of the normal state, the first approach state, and the second approach state.

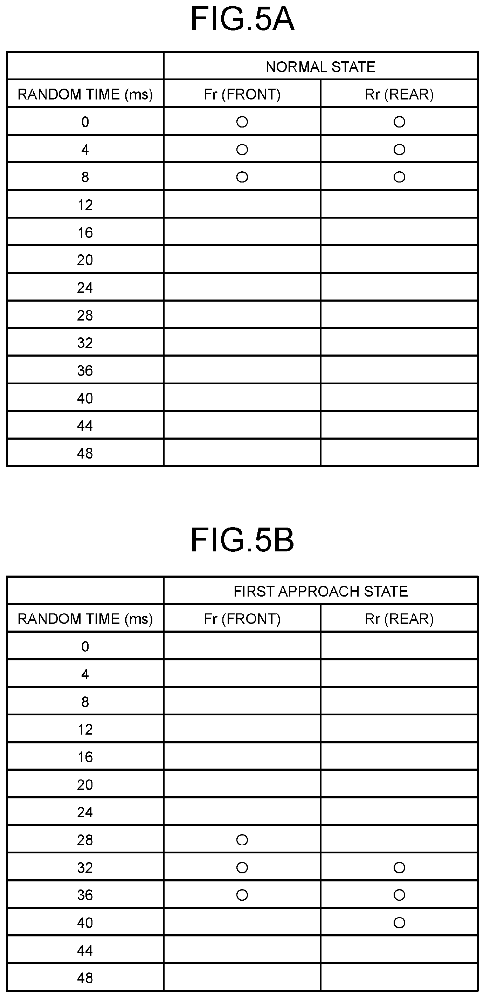

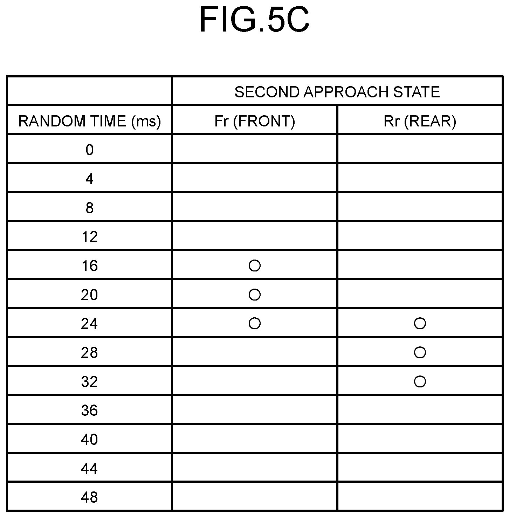

FIGS. 5A to 5C are diagrams each illustrating an example of a random table according to the present embodiment. FIG. 5A is a diagram illustrating an example of a random table for the normal state. FIG. 5B is a diagram illustrating an example of a random table for first approach state. FIG. 5C is a diagram illustrating an example of a random table for the second approach state.

In FIGS. 5A to 5C, a random time for Fr (front) is a random time (the first random time) for transmission waves (namely, ultrasonic waves) from the transmission/reception units 21A to 21D provided at the front part of the vehicle 1, and a random time for Rr (rear) is a random time (the second random time) for transmission waves (namely, ultrasonic waves) from the transmission/reception units 21E to 21H provided at the rear part of the vehicle 1. In addition, three random times are set for each of Fr (front) and Rr (rear), and an optional random time is determined from among the three random times.

Here, the first distance is smaller than a distance based on a difference between the random time corresponding to the first approach state and the random time corresponding to the normal state. The second distance is smaller than a distance based on a difference in time between the random time corresponding to the second approach state and the random time corresponding to the normal state.

A shift of 1 ms in transmission timing of sound wave results in an estimated distance error of about 175 mm. Note that the estimated error varies with the temperature. In a case where the vehicle state transitions from the normal state to the first approach state or the second approach state, which changes the random table 1513, the random time determination unit 1512 selects the minimum value of the random table such that the random time and the detection distances serving as transition conditions, namely, the first distance and the second distance, satisfy the conditions of the following Expressions (1) and (2).

The case that the vehicle state transitions from the normal state to the first approach state: 175 * (minimum random time in first approach state - maximum random time in normal state) > first distance ... (1)

The case that the vehicle state transitions from the normal state to the second approach state: 175 * (minimum random time in second approach state - maximum random time in normal state) > second distance ... (2)

Since the first distance is 3 m in the present embodiment, in the random table 1513 illustrated in FIGS. 5A and 5B, the random times are set to satisfy the above Expression (1). In addition, since the second distance is 3 m in the present embodiment, in the random table 1513 illustrated in FIGS. 5A and 5C, the random times are set to satisfy the above Expression (2).

Then, as described above, after the vehicle state transitions to the first approach state, the vehicle state transitions to the normal state without transitioning to the second approach state. After the vehicle state transitions to the second approach state, the vehicle state transitions to the normal state without transitioning to the first approach state. The random time determination unit 1512 determines a random time from the random table for the normal state. Therefore, when the vehicle state transitions to the normal state after transitioning to the first approach state, the distance obtained by multiplying the difference between the random time in the first approach state and the random time in the normal state by 175 m is larger than the first distance, and no ultrasonic wave is transmitted by this distance, thereby making it possible to avoid interference with an ultrasonic wave from another vehicle.

Similarly, when the vehicle state transitions to the normal state after transitioning to the second approach state, the distance obtained by multiplying the difference between the random time in the second approach state and the random time in the normal state by 175 m is larger than the second distance, and no ultrasonic wave is transmitted by this distance, thereby making it possible to avoid interference with an ultrasonic wave from another vehicle.

The transmission/reception information management unit 1520 manages information that is based on reflected waves received by the transmission/reception unit 21. As illustrated in FIG. 3, the transmission/reception information management unit 1520 includes a detection distance calculation unit 1521 and an abnormality detection unit 1522.

The detection distance calculation unit 1521 calculates a distance to the object based on the transmission wave transmitted by the transmission/reception unit 21 and the reflected wave received by the transmission/reception unit 21. Specifically, the detection distance calculation unit 1521 detects an object and calculates a distance to the object, based on information such as a TOF and a Doppler shift acquired by receiving a reception wave (reflected wave) generated as a transmission wave is reflected by the object. Note that a known method is used as a method of calculating the distance.

The abnormality detection unit 1522 detects an abnormality in the vehicle 1 or the like. In the present embodiment, when the distance calculated by the detection distance calculation unit 1521 is smaller than or equal to the predetermined distance, the abnormality detection unit 1522 determines that the vehicle is approaching the object. Additionally, the abnormality detection unit 1522 detects whether ultrasonic waves interfere, based on the distance calculated by the detection distance calculation unit 1521. For example, when the abnormality detection unit 1522 detects, three consecutive times, that the distance calculated by the detection distance calculation unit 1521 is smaller than or equal to the predetermined threshold, the abnormality detection unit 1522 determines that ultrasonic waves interfere. Note that the method of detecting interference between ultrasonic waves is not limited thereto.

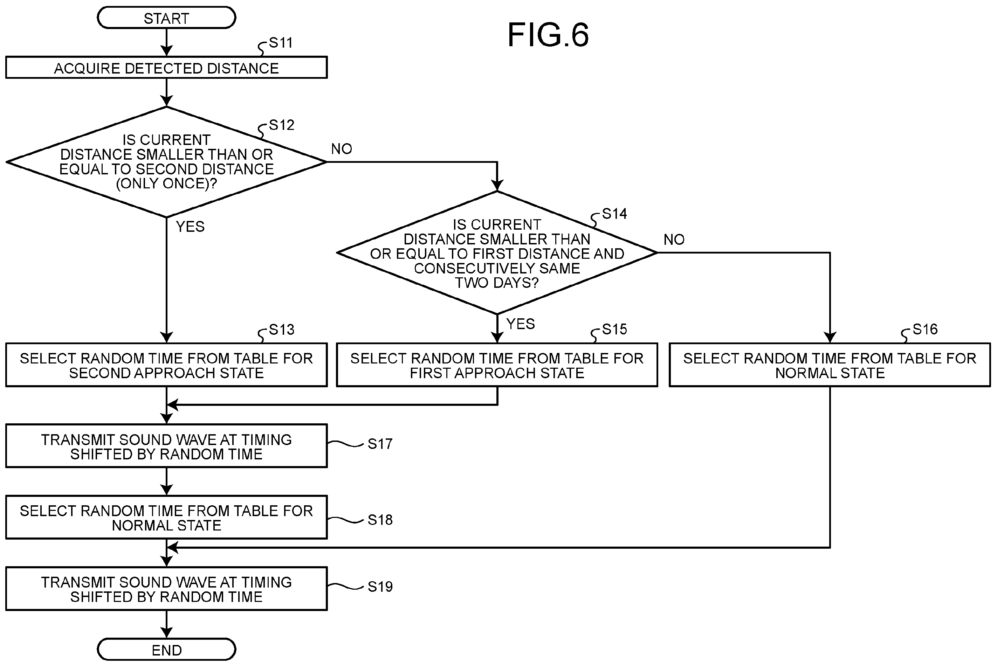

Next, ultrasonic wave transmission processing performed by the object detection device 100 according to the present embodiment configured as described above will be described. FIG. 6 is a flowchart illustrating an example of a procedure of ultrasonic wave transmission processing according to the present embodiment. This transmission processing is performed from the start of traveling of the vehicle 1.

First, the random time determination unit 1512 acquires a distance to an object calculated by the detection distance calculation unit 1521 (S11). Then, the random time determination unit 1512 determines whether the acquired current distance is smaller than or equal to the second distance (S12). Here, the number of times the distance is smaller than or equal to the second distance is one. Then, when the distance is smaller than or equal to the second distance (S12: Yes), the vehicle state transitions to the second approach state, and the random time determination unit 1512 selects a random time from the random table 1513 for the second approach state illustrated in FIG. 5C (S13).

In S12, when the distance is larger than the second distance (S12: No), the random time determination unit 1512 determines whether the current distance is smaller than or equal to the first distance and is consecutively the same twice (S14). When the current distance is smaller than or equal to the first distance and is consecutively the same twice (S14: Yes), the vehicle state transitions to the first approach state, and the random time determination unit 1512 selects a random time from the random table 1513 for the first approach state illustrated in FIG. 5B (S15).

The wave transmission control unit 1511 controls the transmission/reception unit 21 to transmit an ultrasonic wave at a timing shifted by the random time determined in S13 or S15, and as a result, the transmission/reception unit 21 transmits an ultrasonic wave at a timing shifted by the random time (S17).

Next, the vehicle state transitions to the normal state, and the random time determination unit 1512 selects a random time from the random table 1513 for the normal state illustrated in FIG. 5A (S18).

Then, the wave transmission control unit 1511 controls the transmission/reception unit 21 to transmit an ultrasonic wave at a timing shifted by the random time determined in S18, and as a result, the transmission/reception unit 21 transmits an ultrasonic wave at a timing shifted by the random time (S19).

Returning to S14, when the current distance is larger than the first distance or is not consecutively the same twice even if the current distance is smaller than or equal to the first distance (S14: No), the random time determination unit 1512 selects a random time from the random table for the normal state illustrated in FIG. 5A (S16).

Then, the wave transmission control unit 1511 controls the transmission/reception unit 21 to transmit an ultrasonic wave at a timing shifted by the random time determined in S16, and as a result, the transmission/reception unit 21 transmits an ultrasonic wave at a timing shifted by the random time (S19).

Conventionally, an alarm is output by a buzzer in a case where an object is detected by transmitting an ultrasonic wave in a vehicle and a distance to the object is a short distance smaller than or equal to a predetermined distance. Here, when a host vehicle receives an ultrasonic wave transmitted by another vehicle in a state where a given relation regarding transmission timing of ultrasonic wave is made between the host vehicle and the other vehicle, the host vehicle may erroneously recognize the ultrasonic wave as a reflected wave of an ultrasonic wave transmitted by the host vehicle, resulting in so-called interference. Assuming that, for example, the host vehicle and the other vehicle simultaneously transmit ultrasonic waves, the host vehicle erroneously recognizes, as a reflected wave, an ultrasonic wave that is returned from half the distance. Therefore, if an object is in a short distance and is erroneously recognized as being within a buzzer output range, this leads to an erroneous output of the buzzer.

For this reason, as a method of avoiding such erroneous recognition caused by interference, a conventional object detection device determines that interference occurs when the same distance is consecutively detected at a predetermined threshold or more. For example, the object detection device determines that interference occurs when the distance of 30 cm is consecutively detected three times. In a case of the determination that interference occurs, the object detection device can avoid consecutively detecting the same distance by shifting the transmission timing of ultrasonic wave.

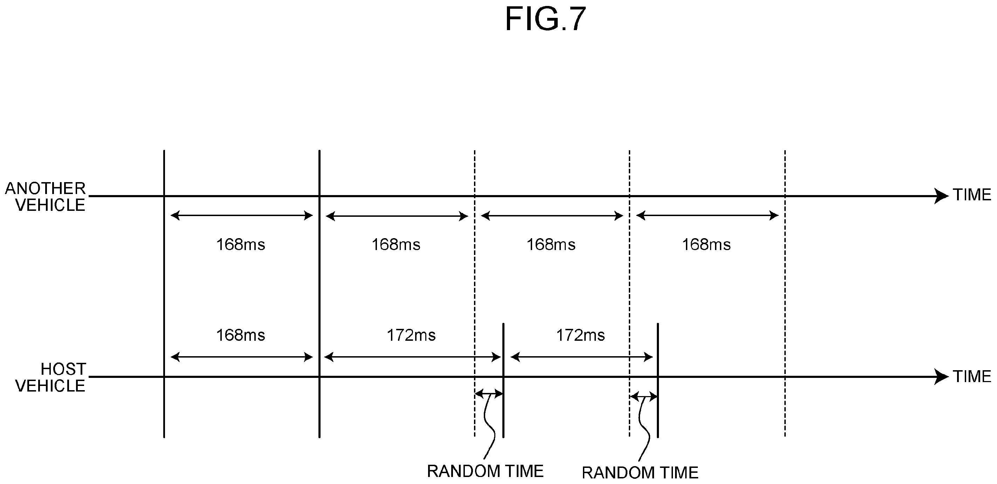

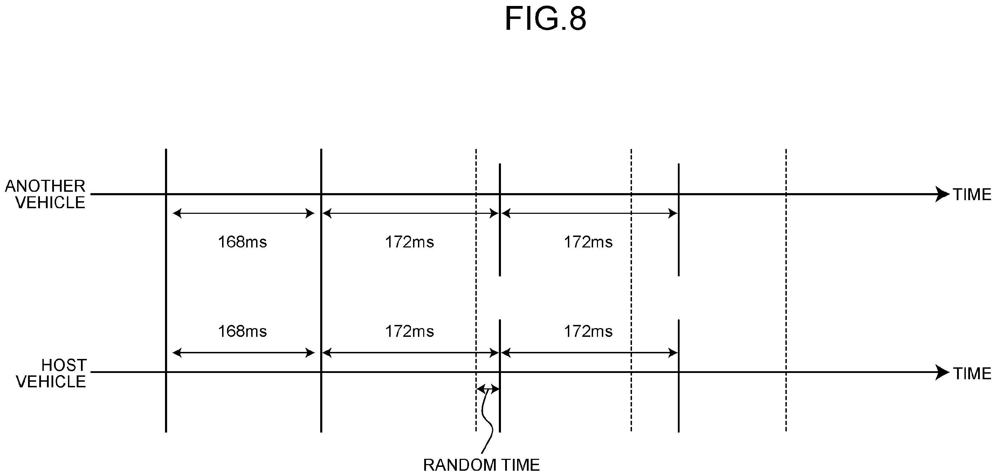

FIGS. 7 and 8 are diagrams each illustrating an example of transmission timing of ultrasonic wave shifted by a random time in the conventional object detection device. As illustrated in FIG. 7, in a case where, for example, ultrasonic waves are transmitted at intervals of 168 ms but determination that interference occurs is made, the object detection device can avoid the interference by transmitting an ultrasonic wave every 172 ms shifted by a random time of 4 ms.

However, when the host vehicle receives an ultrasonic wave from another vehicle, it is often that the other vehicle also receives an ultrasonic wave from the host vehicle. In such a case, a case where object detection devices using the same method as the conventional interference avoidance processing are installed in vehicles will be considered. At this time, even if the object detection device detects that interference occurs and shifts the transmission timing of ultrasonic wave of the host vehicle, in a case where another vehicle shifts the transmission timing in the same manner, there is a possibility that the transmission timings coincide with each other again and interference occurs as illustrated in FIG. 8.

In contrast, in the present embodiment, the random time determination unit 1512 determines a random time as a standby time for shifting the transmission timing in accordance with each of the normal state in which a distance to an object is larger than the first distance or no object is detected, the first approach state in which the distance to the object is smaller than or equal to the first distance, and the second approach state in which the distance to the object is smaller than or equal to a second distance smaller than the first distance. The wave transmission control unit 1511 controls the transmission/reception unit 21 to transmit a transmission wave at a new transmission timing when the transmission timing is delayed by the determined random time. Therefore, according to the present embodiment, even if another vehicle is equipped with the same object detection device as the host vehicle, it is possible to reliably avoid interference between ultrasonic waves because the random time is delayed in accordance with the state of the vehicle 1.

In addition, in the present embodiment, the first distance is smaller than a distance based on a difference between the random time corresponding to the first approach state and the random time corresponding to the normal state, and the second distance is smaller than a distance based on a difference in time between the random time corresponding to the second approach state and the random time corresponding to the normal state, and the random time determination unit 1512 determines a random time corresponding to the normal state after a transmission wave is transmitted at a new transmission timing in the first approach state or the second approach state by the wave transmission control unit 1511. Therefore, by transitioning from the first approach state or the second approach state to the normal state, the distance corresponding to the difference in random time becomes larger than the first distance as a transition condition for transitioning from the normal state to the first approach state and the second distance as a transition condition for transitioning from the normal state to the second approach state. Therefore, according to the present embodiment, even if another vehicle is equipped with the same object detection device as the host vehicle, the possibility of interference with the another vehicle is reduced by the distance corresponding to this difference, making it possible to more reliably avoid interference.

In addition, in the present embodiment, the random time determination unit 1512 determines the random time for transmission waves from the transmission/reception units 21A to 21D provided at the front portion of the vehicle 1 and the random time for transmission waves from the transmission/reception units 21E to 21H provided at the rear portion of the vehicle 1 to be different times. Therefore, according to the present embodiment, even if another vehicle is equipped with the same object detection device as the host vehicle, it is possible to more reliably avoid interference between ultrasonic waves in accordance with the traveling direction of the vehicle 1.

In addition, in the present embodiment, the SSD 121 is further included, the SSD 121 storing the random table 1513 in which a random time is defined for each of the normal state, the first approach state, and the second approach state. The random time determination unit 1512 determines a random time based on the normal state, the first approach state, and the second approach state, and the random table 1513. Therefore, according to the present embodiment, since the random time can be determined by switching the random table, it is possible to easily and more reliably avoid interference between ultrasonic waves even if another vehicle is equipped with the same object detection device as the host vehicle.

In the above-described embodiment, the CPU 130 reads and executes the program stored in the storage device such as the ROM 122 or the SSD 121, thereby implementing various functional modules such as the wave transmission control unit 1511, the random time determination unit 1512, the detection distance calculation unit 1521, the abnormality detection unit 1522, the vehicle state estimation unit 160, the notification control unit 162, the vehicle information management unit 163, and the braking control unit 164. However, the present invention is not limited thereto. For example, various functional modules such as the wave transmission control unit 1511, the random time determination unit 1512, the detection distance calculation unit 1521, the abnormality detection unit 1522, the vehicle state estimation unit 160, the notification control unit 162, the vehicle information management unit 163, and the braking control unit 164 can be implemented by independent hardware.

Note that the object detection program executed by the object detection device 100 according to the above-described embodiment is provided by being pre-installed in the ROM or the like.

The object detection program executed by the object detection device 100 according to the above-described embodiment may be provided by being recorded in a computer-readable recording medium such as a CD-ROM, a flexible disk (FD), a CD-R, or a digital versatile disk (DVD) as a file in an installable format or an executable format.

Moreover, the object detection program executed by the object detection device 100 according to the above-described embodiment may be stored on a computer connected to a network such as the Internet and provided by being downloaded via the network. In addition, the object detection program executed by the object detection device 100 according to the above-described embodiment may be provided or distributed via a network such as the Internet.

The object detection program executed by the object detection device 100 according to the above-described embodiment has a module configuration including the above-described units (the wave transmission control unit 1511, the random time determination unit 1512, the detection distance calculation unit 1521, the abnormality detection unit 1522, the vehicle state estimation unit 160, the notification control unit 162, the vehicle information management unit 163, the braking control unit 164, etc.). As actual hardware, the CPU reads the object detection program from the ROM and executes the object detection program, thereby loading the units onto the main storage device, such that the wave transmission control unit 1511, the random time determination unit 1512, the detection distance calculation unit 1521, the abnormality detection unit 1522, the vehicle state estimation unit 160, the notification control unit 162, the vehicle information management unit 163, the braking control unit 164, and the like are generated on the main storage device.

Although some embodiments of the present invention have been described, these embodiments have been presented as examples, and are not intended to limit the scope of the invention. These novel embodiments can be implemented in various other forms, and various omissions, substitutions, and changes can be made without departing from the gist of the invention. These embodiments and modifications thereof fall within the scope and gist of the invention, and fall within the scope of the invention set forth in the claims and equivalents thereof.

### [Summary of Present Embodiment]

An object detection device (100) according to the present embodiment comprises at least the following configuration.

Namely, an object detection device (100) is installed in a vehicle (1) to detect an object present around the vehicle (1), the object detection device (100) including:
a control unit (1511) that controls a transmission/reception unit (21) that transmits a transmission wave and receives a reception wave generated by reflection of the transmission wave against the object, the control unit controlling the transmission/reception unit (21) to transmit the transmission wave at a predetermined transmission timing;
a distance calculation unit (1521) that calculates a distance to the object based on the transmission wave and the reception wave; and
a determination unit (1512) that determines a random time as a standby time for shifting the transmission timing, the random time being determined in accordance with each of a normal state, a first approach state, and a second approach state, the normal state being a state in which the distance to the object is larger than a first distance or in which the object is not detected, the first approach state being a state in which the distance to the object is smaller than or equal to the first distance, the second approach state being a state in which the distance to the object is smaller than or equal to a second distance smaller than the first distance, in which
the control unit (1511) controls the transmission/reception unit (21) to transmit the transmission wave at a new transmission timing obtained by delaying the transmission timing by the determined random time.

With the configuration above, as an example, even if another vehicle is equipped with the same object detection device (100) as the host vehicle, it is possible to reliably avoid interference between ultrasonic waves.

In addition, in the object detection device (100) according to the embodiment, the first distance is smaller than a distance based on a difference between the random time corresponding to the first approach state and the random time corresponding to the normal state, and the second distance is smaller than a distance based on a difference in time between the random time corresponding to the second approach state and the random time corresponding to the normal state, and the determination unit (1512) determines the random time in accordance with the normal state after the transmission wave is transmitted by the control unit (1511) at the new transmission timing in the first approach state or in the second approach state.

With the configuration above, as an example, even if another vehicle is equipped with the same object detection device (100) as the host vehicle, it is possible to more reliably avoid interference.

Moreover, in the object detection device (100) according to the embodiment, the determination unit (1512) differentiates between a random time for the transmission wave from the transmission/reception unit (21) provided at a front part of the vehicle (1) and a random time for the transmission wave from the transmission/reception unit (21) provided at a rear part of the vehicle (1).

With the configuration above, as an example, even if another vehicle is equipped with the same object detection device (100) as the host vehicle, it is possible to reliably avoid interference between ultrasonic waves in accordance with the traveling direction of the vehicle.

In addition, the object detection device (100) according to the embodiment further includes a storage unit (121) that stores random information (1513) in which a random time is defined for each of the normal state, the first approach state, and the second approach state, and the determination unit (1512) determines the random time based on the normal state, the first approach state, and the second approach state, and the random information (1513).

With the configuration above, as an example, even if another vehicle is equipped with the same object detection device (100) as the host vehicle, it is possible to easily and more reliably avoid interference between ultrasonic waves.

### EXPLANATIONS OF LETTERS OR NUMERALS

1 VEHICLE
21 TRANSMISSION/RECEPTION UNIT
50 VEHICLE CONTROL SYSTEM
100 OBJECT DETECTION DEVICE (ECU)
121 SSD
211 VIBRATOR
150 SOUND WAVE CONTROL UNIT
1510 TRANSMISSION/RECEPTION CONTROL UNIT
1511 WAVE TRANSMISSION CONTROL UNIT
1512 RANDOM TIME DETERMINATION UNIT
1513 RANDOM TABLE
1520 TRANSMISSION/RECEPTION INFORMATION MANAGEMENT UNIT
1521 DETECTION DISTANCE CALCULATION UNIT
1522 ABNORMALITY DETECTION UNIT
160 VEHICLE STATE ESTIMATION UNIT
162 NOTIFICATION CONTROL UNIT
163 VEHICLE INFORMATION MANAGEMENT UNIT
164 BRAKING CONTROL UNIT

## Claims

1. An object detection device installed in a vehicle to detect an object present around the vehicle, the object detection device comprising:
a control unit configured to control a transmission/reception unit that transmits a transmission wave and receives a reception wave generated by reflection of the transmission wave against the object, the control unit controlling the transmission/reception unit to transmit the transmission wave at a predetermined transmission timing;
a distance calculation unit configured to calculate a distance to the object based on the transmission wave and the reception wave; and
a determination unit configured to determine a random time as a standby time for shifting the transmission timing, the random time being determined in accordance with each of a normal state, a first approach state, and a second approach state, the normal state being a state in which the distance to the object is larger than a first distance or in which the object is not detected, the first approach state being a state in which the distance to the object is smaller than or equal to the first distance, the second approach state being a state in which the distance to the object is smaller than or equal to a second distance smaller than the first distance,
wherein the control unit is configured to control the transmission/reception unit to transmit the transmission wave at a new transmission timing obtained by delaying the transmission timing by the determined random time.

2. The object detection device according to claim 1, wherein
the first distance is smaller than a distance based on a difference between the random time corresponding to the first approach state and the random time corresponding to the normal state, and the second distance is smaller than a distance based on a difference in time between the random time corresponding to the second approach state and the random time corresponding to the normal state, and
the determination unit is configured to determine the random time in accordance with the normal state after the transmission wave is transmitted by the control unit at the new transmission timing in the first approach state or in the second approach state.

3. The object detection device according to claim 2, wherein the determination unit is configured to differentiate between a random time for the transmission wave from the transmission/reception unit provided at a front part of the vehicle and a random time for the transmission wave from the transmission/reception unit provided at a rear part of the vehicle.

4. The object detection device according to claim 1, further comprising a storage unit that stores random information in which a random time is defined for each of the normal state, the first approach state, and the second approach state,
wherein the determination unit is configured to determine the random time based on the normal state, the first approach state, and the second approach state, and the random information.
